# EUROPÄISCHE PATENTSCHRIFT

(11) **EP 0 274 639 B1**
(45) Veröffentlichungstag und Bekanntmachung des Hinweises auf die Patenterteilung: **04.08.1993**
(21) Anmeldenummer: 87117712.7
(22) Anmeldetag: 30.11.1987
(51) Int. Cl.: H02H 7/26

(54) **Schutzschaltsystem**
Protective interrupting system
Système de protection à interruption

(30) Priorität: 12.12.1986 DE 3642373
(43) Veröffentlichungstag der Anmeldung: 20.07.1988
(73) Patentinhaber: SIEMENS AKTIENGESELLSCHAFT, 80333 München (DE)
(72) Erfinder: Wolf, Johann, Dipl.-Ing., D-8401 Pentling (DE)

(56) Entgegenhaltungen:
- EP-A- 0 096 601
- EP-A- 0 119 187
- EP-A- 0 175 120
- DE-A- 2 854 711
- DE-A- 3 111 255
- US-A- 4 161 651

## Beschreibung

Die Erfindung bezieht sich auf ein Schutzschaltsystem aus Zweigschaltern in Gruppen, wobei einer Gruppe von Zweigschaltern jeweils der Funktion nach ein Gruppenschalter vorgeordnet ist. Der bzw. die Gruppenschalter stehen in Informationsaustausch von Meide- und Befehlssignalen, so daß im Versagensfall der zugeordnete Gruppenschalter die Abschaltfunktion übernehmen kann. Es ist ein System aus Gruppen- und Zweigschaltern bekannt (EP-A1-0 119 187), das ein Niederspannungsnetz bildet, bei dem ein Informationsbus Zweigschalter und Gruppenschalter miteinander verbindet. Als Informationsnetz kann hierbei ein eigenes Netz oder das zur Energieübertragung herangezogen werden.

Um das Schaltverhalten der verschiedenen Schaltgeräte aufeinander abzustimmen, ist es üblich, Signale, beispielsweise über den Schaltzustand und die Belastung, interaktiv auszutauschen. Durch ein Bus-System können alle in einer Gruppe oder Anlage befindlichen Schaltgeräte untereinander verbunden werden. Es ist auch üblich, eine entsprechende Zentrale oder Steuerung in das Bus-System zu integrieren.

Eine Zeitverzögerung durch ein Bus-System stört bei den meisten Informationen nicht, da sie ohne Schaden mehrere Millisekunden verzögert werden können. Signale im Zusammenhang mit einem Kurzschluß in der Anlage müssen jedoch möglichst unverzögert berücksichtigt werden, um die Anlage und nachgeschaltete Verbraucher vor Schaden zu schützen. Hier sind innerhalb von Millisekunden während des Stromanstiegs Entscheidungen zu treffen und Schalthandlungen durchzuführen. Nach dem ersten Zugriff ist dann ein Bus belegt und alle anderen sendewilligen Teilnehmer haben das Ende der laufenden Informationsübertragung abzuwarten. Um diese Zeit kurz zu halten, kann man den Bus für relativ hohe Datenraten auslegen. Ein entpsrechend aufwendiger Bus ist jedoch für den übrigen Informationsfluß nicht erforderlich.

Der Erfindung liegt die Aufgabe zugrunde, ein Schutzschaltsystem zu entwickeln, das mit einem preisgünstigen und anspruchslosen Informationsbus arbeiten kann und dennoch Abschaltbefehle unverzögert bzw. beschleunigt weitergibt.

Die Lösung der geschilderten Aufgabe erfolgt durch ein Schutzschaltsystem nach Patentanspruch 1. Die Zweigschalter einer Gruppe stehen mit dem zugeordneten Gruppenschalter, gegebenenfalls unter Aufschaltung einer Zentralstation für Informationsverarbeitung, über einen Informationsbus in Informationsaustausch. Der Informationsbus ist von irgend einem der Zweigschalter der Gruppe im Sinne einer ODER-Verknüpfung mit einem besonderen Signalzustand beauschlagbar, welcher hinsichtlich des regulären Bus-Weges beschleunigt dem zugeordneten Gruppenschalter zum unverzögerten Abschalten zugeführt wird. Die Beaufschlagung durch einen besonderen Signalzustand sollte mindestens zwei Zustande weiterzuleiten ermöglichen. Ein Zustand entspricht hierbei dem Befehl, unverzögert abzuschalten. Dieser Befehlszustand wird dem Gruppenschalter im Sinne einer ODER-Verknüpfung zugeführt. Die Meldung kann von irgend einem der Zweigschalter der Gruppe herrühren.

Es ist eine Schutzeinrichtung für ein elektrisches Netz bekannt (EP-A1-0 175 120), bei der ein Bus-System als Datennahverbindung ausgebildet sein kann und bei der für Reservefunktionen zusätzlich noch eine gesicherte Verbindung zur Übertragung eines direkten oder indirekten Ausschaltbefehls vorgesehen sein kann. Erfindungsgemäß wird jedoch ein den elektrischen Ausschaltbefehl kennzeichnender elektrischer Zustand dem Bus überlagert, im Sinne eines gedachten gesonderten Informationsweges.

Das Schutzschaltsystem kann so verwirklicht werden, daß der besondere Signalzustand ein besonderer elektrischer Zustand, beispielsweise Spannungspegel, des Informationsbusses ist. Der besondere Signalzustand kann auch auf einem Lichtwellenleiter bestehen, der zugleich als Informationsbus dient und dem als Ausschaltsignal Dauerlicht zugeführt wird.

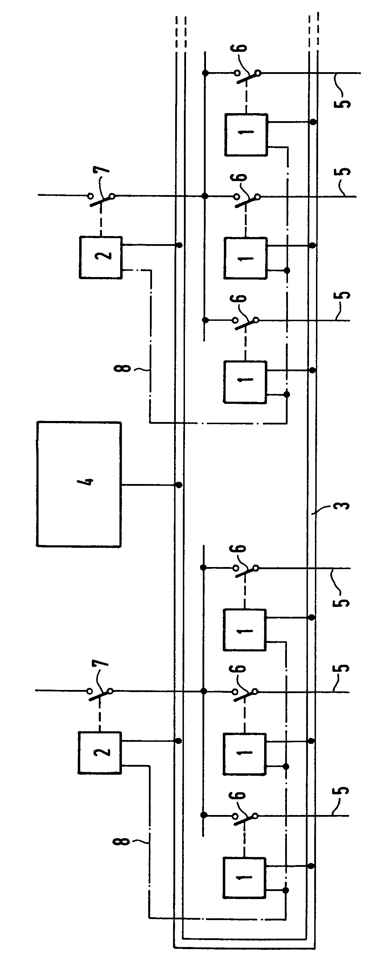

Die Erfindung soll nun anhand eines in der Zeichnung grob schematisch wiedergegebenen Ausführungsbeispiels näher erläutert werden.

Der in der Zeichnung wiedergegebene gesonderte Informationsweg 8 ist als ein gedachter Informationsweg zu verstehen, dessen Signalzustand dem Informationsbus überlagert ist.

Das Schutzschaltsystem besteht aus Zweigschaltern 1 und jeweils einer Gruppe von Zweigschaltern vorgeordnetem Gruppenschalter 2, mit dem die Zweigschalter zumindest einer Gruppe - im Ausführungsbeispiel beider Gruppen - durch einen Informationsbus 3 in Informationsaustausch für Melde- und Befehlssignale stehen. Im Ausführungsbeispiel kann sich eine Zentralstation 4 für Informationsverarbeitung auf den Bus aufschalten. In den Zweigleitungen 5 sind jeweils mit dem Gruppenschalter gekoppelte Kontaktverbindungen 6 angeordnet. Jeder der beiden Gruppenschalter 2 wirkt jeweils auf eine zugeordnete Kontaktvorrichtung 7.

Wesentlich ist, daß ein gesonderter Informationsweg 8 im Sinne einer "wired-OR"-Verkünpfung dem Informationsbus überlagert ist. Er ist zwischen Zweigschaltern 1 und zugeordnetem Gruppenschalter 2 für das Ausschaltsignal vorgesehen. Dadurch kann ein Signal für erforderliche Abschaltung von einem Zweigschalter 1 unverzögert, bzw. hinsichtlich des regulären Bus-Weges beschleunigt, dem zugeordneten Gruppenschalter 2 zugeführt und berücksichtigt werden. In bestimmten Anlagen kann es auch vorteilhaft sein, Ausschaltsignale von der Zentralstation 4 oder von einem Gruppenschalter in Verbindung mit Vorranglisten in der Zentralstation 4 an einen bestimmten Zweigschalter 1 abzugeben.

Der besondere Signalzustand für den Ausschaltbefehl kann ein besonderer elektrischer Zustand des Informationsbusses sein. Dieser Zustand kann ein bestimmter Spannungspegel sein. Der Informationsbus kann dabei als elektrische Leitung oder auch als Lichtwellenleiter ausgeführt sein. Bei einem Lichtwellenleiter können die Abschaltsignale als Dauerlicht und die übrigen Signale als gepulstes Licht übertragen werden.

## Patentansprüche

1. Schutzschaltsystem aus Zweigschaltern (1) in Gruppen, wobei einer Gruppe von Zweigschaltern (1) jeweils der Funktion nach ein Gruppenschalter (2) vorgeordnet ist, wobei der bzw. die Gruppenschalter aufgrund eines Informationsaustausches von Melde- und Befehlssignalen im Versagensfall die Abschaltfunktion übernehmen, wobei die Zweigschalter (1) einer Gruppe mit dem zugeordneten Gruppenschalter (2), gegebenenfalls unter Aufschaltung einer Zentralstation (4) für Informationsverarbeitung, über einen Informationsbus (3) in Informationsaustausch stehen und wobei der Informationsbus (3) von irgend einem der Zweigschalter (1) der Gruppe im Sinne einer ODER-Verknüpfung mit einem besonderen Signalzustand beaufschlagbar ist, welcher hinsichtlich des regulären Bus-Weges beschleunigt dem zugeordneten Gruppenschalter zum unverzögerten Abschalten zugeführt wird.

2. Schutzschaltsystem nach Anspruch 1,
**dadurch gekennzeichnet,** daß der besondere Signalzustand ein besonderer elektrischer Zustand, beispielsweise Spannungspegel, des Informationsbusses (3) ist.

3. Schutzschaltsystem nach Anspruch 1,
**dadurch gekennzeichnet,** daß der besondere Signalzustand auf einem Lichtwellenleiter besteht, der zugleich als Informationsbus dient und dem als Ausschaltsignal Dauerlicht zuzuführen ist.

## Claims

1. Protective switching system comprising groups of branch switches (1), in which a group switch (2) is arranged in front of a group of branch switches (1), respectively, according to function, in which in the case of failure the group switch or switches takes or take over the cut-off function on the basis of an exchange of information of status and command signals, in which the branch switches (1) of one group are in exchange of information with the associated group switch (2), if applicable with switching-in of an information-processing central station (4), by way of an information bus (3) and in which the information bus (3) may be acted upon by any one of the branch switches (1) of the group for the purposes of an OR-operation with a special signal state which, accelerated with regard to the regular bus path, is fed to the associated group switch for the purpose of cut-off without delay.

2. Protective switching system according to claim 1, characterised in that the special signal state is a special electrical state, for example a voltage level, of the information bus (3).

3. Protective switching system according to claim 1, characterised in that the special signal state exists on a light waveguide which at the same time is used as an information bus and to which maintained light is to be fed as a cut-off signal.

## Revendications

1. Système de commutation de sécurité, comportant des commutateurs de dérivation (1) disposés par groupes, dans lequel, du point de vue du fonctionnement, un commutateur de groupe (2) est branché en amont d'un groupe de commutateurs de dérivation (1), le ou les commutateurs de groupe assurent la fonction de coupure en cas de défaillance, sur la base d'un échange d'informations de signaux de signalisation et de signaux d'instruction, les commutateurs de dérivation (1) d'un groupe échangent des informations, par l'intermédiaire d'un bus de transmission d'informations (3), avec le commutateur de groupe associé (2), éventuellement moyennant le branchement d'un poste central (4) pour le traitement des informations, et le bus de transmission d'informations (3) peut être chargé par n'importe lequel des commutateurs de dérivation (1) du groupe, dans le sens d'une combinaison OU, avec un état de signal particulier qui est envoyé au commutateur de groupe associé, d'une manière accélérée, en rapport avec la voie régulière du bus, pour réaliser la coupure immédiate.

2. Système de commutation de sécurité suivant la revendication 1, caractérisé par le fait que l'état de signal particulier est un état électrique particulier, par exemple un niveau de tension, du bus de transmission d'informations (3).

3. Système de commutation de sécurité suivant la revendication 1, caractérisé par le fait que l'état de signal particulier existe dans un guide d'ondes optiques, qui sert simultanément de bus de transmission d'informations et auquel une lumière permanente doit être envoyée en tant que signal de coupure.
